(19) **Europäisches Patentamt / European Patent Office / Office européen des brevets**

(11) **EP 4 618 639 A1**

(12) **EUROPEAN PATENT APPLICATION**
published in accordance with Art. 153(4) EPC

(43) Date of publication:
**17.09.2025 Bulletin 2025/38**

(21) Application number: **23888275.7**

(22) Date of filing: **07.06.2023**

(51) International Patent Classification (IPC):
**H04W 52/30** (2009.01)  **H04W 28/06** (2009.01)
**H04W 28/18** (2009.01)  **H04W 72/1268** (2023.01)
**H04W 72/21** (2023.01)

(52) Cooperative Patent Classification (CPC):
**H04W 28/06; H04W 28/18; H04W 52/30;**
**H04W 72/1268; H04W 72/21**

(86) International application number:
**PCT/JP2023/021250**

(87) International publication number:
**WO 2024/100918 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022  JP 2022180343**

(71) Applicant: **Panasonic Intellectual Property Corporation of America**
**Torrance, CA 90504 (US)**

(72) Inventors:
• **YAMAMOTO, Tetsuya**
  **Kadoma-shi, Osaka 571-0057 (JP)**
• **SUZUKI, Hidetoshi**
  **Kadoma-shi, Osaka 571-0057 (JP)**

(74) Representative: **Grünecker Patent- und Rechtsanwälte**
**PartG mbB**
**Leopoldstraße 4**
**80802 München (DE)**

(54) **TERMINAL, BASE STATION AND COMMUNICATION METHOD**

(57) This terminal comprises: a control circuit that determines first information related to a surplus power relative to a first transmission setting made to the terminal and second information related to a surplus power related to a second transmission setting not made to the terminal; and a transmission circuit that transmits the first information and the second information.

| P | R | PH |
|---|---|---|
| MPE or R | | $P_{cMAX,f,c,current}$ |
| | | $P_{cMAX,f,c,other}$ |

**FIG. 8**

EP 4 618 639 A1

## Description

Technical Field

The present disclosure relates to a terminal, a base station, and a communication method.

Background Art

In recent years, a dramatic growth of Internet of Things (IoT) has been expected with the expansion and diversification of radio services as a background. The usage of mobile communication is expanding to all fields such as automobiles, houses, home electric appliances, or industrial equipment in addition to information terminals such as smartphones. In order to support the diversification of services, a substantial improvement in the performance and function of mobile communication systems has been required for various requirements such as an increase in the number of connected devices or low latency in addition to an increase in system capacity. The 5th generation mobile communication system (5G) has features such as enhanced mobile broadband (eMBB), massive machine type communication (mMTC), and ultra reliable and low latency communication (URLLC), and can flexibly provide radio communication in response to a wide variety of needs.

The 3rd Generation Partnership Project (3GPP) as an international standardizing body has been specifying New Radio (NR) as one of 5G radio interfaces.

Citation List

Non-Patent Literature (hereinafter referred to as "NPL")

NPL 1
3GPP TS38.104 V15.18.0, "NR Base Station (BS) radio transmission and reception (Release 15)," September 2022.
NPL 2
RP-202928, "New WID on NR coverage enhancements," China Telecom, December 2020.
NPL 3
RP-220937, "Revised WID on Further NR coverage enhancements," China Telecom, March 2022.
NPL 4
3GPP TS38.211 V17.3.0, "NR Physical channels and modulation (Release 17)," September 2022.
NPL 5
3GPP TS38.212 V17.3.0, "NR Multiplexing and channel coding (Release 17)," September 2022.
NPL 6
3GPP TS38.213 V17.3.0, "NR Physical layer procedures for control (Release 17)," September 2022.
NPL 7
3GPP TS38.214 V17.3.0, "NR Physical layer procedures for data (Release 17)," September 2022.
NPL 8
3GPP TS38.321 V17.2.0, "NR; Medium Access Control (MAC) protocol specification (Release 17)," September 2022.
NPL 9
3GPP TS38.133 V17.7.0, "NR; Requirements for support of radio resource management (Release 17)," September 2022.
NPL 10
3GPPP TS38.101-1 V17.7.0, "NR; User Equipment (UE) radio transmission and reception; Part 1: Range 1 Standalone (Release 17)," September 2022.

Summary of Invention

There is, however, room for consideration on a method for transmitting a signal in the uplink.

One non-limiting and exemplary embodiment facilitates providing a terminal, a base station, and a communication method each capable of improving the performance of receiving a signal in the uplink.

A terminal according to an embodiment of the present disclosure includes: control circuitry, which, in operation, determines first information on surplus power for a first transmission configuration configured for the terminal and second information on surplus power for a second transmission configuration not configured for the terminal; and transmission circuitry, which, in operation, transmits the first information and the second information.

It should be noted that general or specific embodiments may be implemented as a system, a method, an integrated circuit, a computer program, a storage medium, or any selective combination thereof.

According to an embodiment of the present disclosure, a signal can be appropriately transmitted in the uplink.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 is a diagram illustrating an example of Power Headroom Report (PHR) Medium Access Control-Control Element (MAC-CE);

FIG. 2 is a diagram illustrating an example of the relationship between a Power Headroom (PH) value and a PH level;

FIG. 3 is a diagram illustrating an example of the relationship between the PH level and the actual value in a unit of dB;

FIG. 4 is a diagram illustrating an example of the relationship between a value of $P_{CMAX,f,c}$ and a transmission power level;

FIG. 5 is a diagram illustrating an example of the relationship between the transmission power level and the actual value in a unit of dB;

FIG. 6 is a block diagram illustrating a configuration example of a part of a base station;

FIG. 7 is a block diagram illustrating a configuration example of a part of a terminal;

FIG. 8 is a diagram illustrating a configuration example of a PHR MAC CE;

FIG. 9 is another diagram illustrating a configuration example of the PHR MAC CE;

FIG. 10 is a diagram illustrating an example of the relationship between a transmission configuration configured for the terminal and a reference transmission configuration;

FIG. 11 is a flowchart illustrating an exemplary operation of the terminal;

FIG. 12 is a block diagram illustrating a configuration example of the base station;

FIG. 13 is a block diagram illustrating a configuration example of the terminal;

FIG. 14 illustrates an exemplary architecture for a 3GPP NR system;

FIG. 15 schematically illustrates functional split between NG-RAN and 5GC;

FIG. 16 is a sequence diagram of Radio Resource Control (RRC) connection setup/reconfiguration procedure;

FIG. 17 schematically illustrates usage scenarios of enhanced Mobile BroadBand (eMBB), massive Machine Type Communications (mMTC), and Ultra Reliable and Low Latency Communications (URLLC); and

FIG. 18 is a block diagram illustrating an exemplary 5G system architecture for a non-roaming scenario.

Description of Embodiments

Hereinafter, embodiments of the present disclosure will be described in detail with reference to the accompanying drawings.

In NR, for example, in addition to a frequency band of 6 GHz or less, mainly within 700 MHz to 3.5 GHz band (for example, may be referred to as Frequency Range 1 (FR1)), which has been used for cellular communication, a millimeter-wave band such as 28 GHz or 39 GHz band capable of ensuring a wide band (for example, may be referred to as Frequency Range 2 (FR2)) can be utilized (for example, see NPL 1). Further, for example, in FR1, a high frequency band is possibly used compared with the frequency band used in Long Term Evolution (LTE) or 3rd Generation mobile communication systems (3G) such as 3.5 GHz band.

The higher the frequency band is, the greater a radio wave propagation loss is, and thus, the received quality of radio waves is likely to deteriorate. Hence, in NR, for example, it is expected to ensure almost the same communication area (or coverage) as in the Radio Access Technology (RAT) such LTE or 3G, in other words, to ensure an appropriate communication quality when the high frequency band is used compared with LTE or 3G. For example, in 3GPP Release 17 (for example, referred to as "Rel. 17") and Release 18 (for example, referred to as "Rel. 18"), methods for improving coverage in NR have been studied (see, for example, NPLs 2 and 3).

In NR, a terminal (for example, also referred to as user equipment (UE)) transmits and receives data in accordance with, for example, a resource allocation indicated by a layer 1 control signal (for example, Downlink Control Information (DCI)) on a downlink control channel (for example, Physical Downlink Control Channel (PDCCH)) from a base station (for example, also referred to as gNB), or Radio Resource Control (RRC), which is layer 3 (for example, see NPLs 4 to 7).

In the uplink (Uplink (UL)), for example, a terminal transmits an uplink data channel (for example, Physical Uplink Shared Channel (PUSCH)) in accordance with a resource allocation from a base station (for example, Grant or UL grant).

[Transmission Waveform of PUSCH]

In NR, Discrete Fourier Transform-spread-Orthogonal Frequency Division Multiplexing (DFT-s-OFDM) and Cyclic Prefix-OFDM (CP-OFDM) are supported as transmission waveforms of PUSCH.

DFT-s-OFDM has a lower Peak-to-Average Power Ratio (PAPR) of the transmission signal and higher power utilization efficiency than CP-OFDM, and thus has a transmission waveform that can ensure wide uplink coverage. In addition, CP-OFDM is highly compatible with Multiple-Input Multiple-Output (MIMO), and thus has a transmission waveform effective for high-efficiency transmission (e.g., multi-rank or multi-layer transmission in spatial multiplex transmission) in an environment with high received quality (e.g., SNR: Signal-to-Interference and Noise power Ratio).

In NR up to Rel. 17, the transmission waveform of PUSCH is configured semi-statically by RRC (see, for example, NPL 7).

For example, the transmission waveform of Message 3 (Msg.3) PUSCH in the 4-step random access procedure is determined based on the parameter "msg3-transformPrecoder" configured by RRC.

Further, for example, the transmission waveform of Message A (Msg.A) PUSCH in the 2-step random access procedure is determined based on the parameter "msgA-transformPrecoder" configured by RRC. Note that, in a case where msgA-transformPrecoder is not configured by RRC, the transmission waveform of Msg.A PUSCH may be determined based on msg3-transformPrecoder.

Further, for example, the transmission waveform of PUSCH dynamically scheduled by DCI format 0-0 (for example, DG-PUSCH: Dynamic Grant-PUSCH) is determined based on the parameter "msg3-transformPrecoder" configured by RRC.

Further, for example, the transmission waveform of PUSCH dynamically scheduled by DCI format 0-1 or DCI format 0-2 (for example, DG-PUSCH) is determined based on the parameter "transformPrecoder" included in the pusch-Config information element (IE) configured by RRC. Note that, in a case where the transformPrecoder is not configured by RRC, the transmission waveform of PUSCH dynamically scheduled by DCI format 0-1 or DCI format 0-2 may be determined based on msg3-transformPrecoder.

Further, for example, the transmission waveform of PUSCH that is transmitted based on a resource allocation indicated by RRC, which is layer 3, or a semi-fixed resource allocation by Activation DCI (for example, CG-PUSCH: Configured grant-PUSCH) is determined based on the parameter "transformPrecoder" included in the configuredGrant-Config IE configured by RRC. Note that, in a case where transformPrecoder is not configured by RRC, the transmission waveform of CG-PUSCH may be determined based on msg3-transformPrecoder.

[Uplink Transmission Power Control]

In NR, a terminal feeds back, to a base station, a Power Headroom Report (PHR) including information on surplus power (Power Headroom (PH)) in the uplink. The base station may dynamically control the uplink transmission power of the terminal based on the PHR, for example.

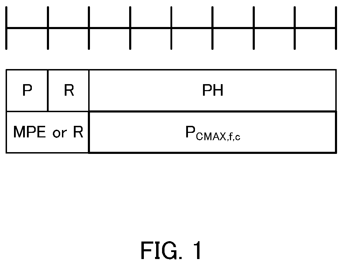

The PHR in NR up to Rel. 17 is configured, for example, by a Medium Access Control-Control Element (MAC-CE) illustrated in FIG. 1 (see, for example, NPL 8).

In FIG. 1, "R" represents a Reserved bit (for example, one bit).

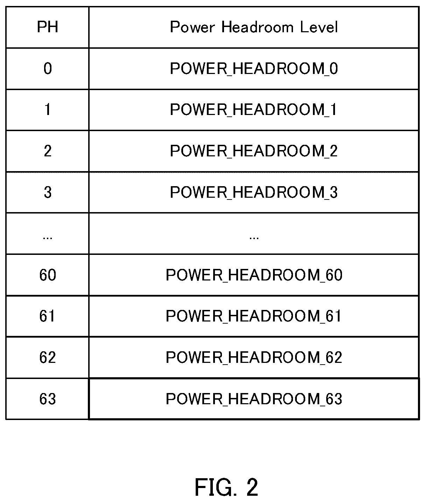

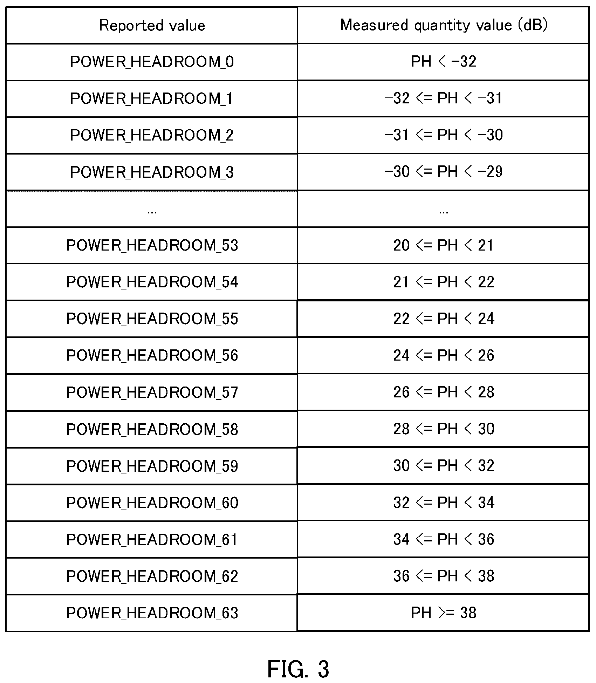

Further, in FIG. 1, "PH" represents uplink surplus power, and the field size is six bits. The relationship between the PH value shown in FIG. 1 and the PH level corresponding to the PH value is given, for example, in FIG. 2 (see, for example, NPL 8). Further, the relationship between each PH level illustrated in FIG. 2 and an actual value in a unit of dB is given, for example, in FIG. 3 (see, for example, NPL 9).

Further, in FIG. 1, "P" represents, for FR1, a field (for example, one bit) indicating whether to apply power back-off for power control, and represents, for FR2, a field (for example, one bit) indicating whether the value of the applied Power management-Maximum Power Reduction (P-MPR) is less than a threshold (for example, "P-MPR_00").

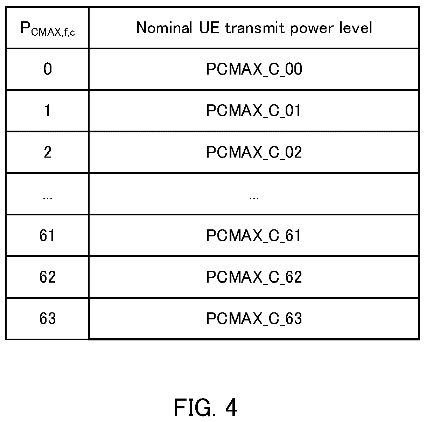

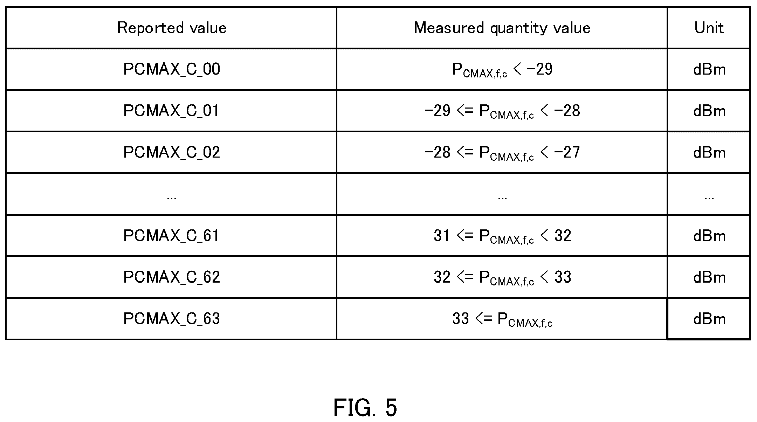

Further, in FIG. 1, "$P_{CMAX,f,c}$" represents the maximum transmission power $P_{CMAX,f,c}$ of the terminal used for calculating the value of PH included in the PHR, and the field size is six bits. The relationship between the value of $P_{CMAX,f,c}$ illustrated in FIG. 1 and the corresponding transmission power level is given, for example, in FIG. 4 (see, for example, NPL 8). Further, the relationship between each transmission power level illustrated in FIG. 4 and an actual value in a unit of dB is given, for example, in FIG. 5 (see, for example, NPL 9).

In FIG. 1, "MPE" represents a field (for example, two bits) indicating a transmission power back-off value for satisfying a requirement for Maximum Permissible Exposure (MPE) in FR2.

The uplink transmission control (for example, PHR) has been described above.

In a general cellular system, an operation is assumed in which DFT-s-OFDM is configured for a terminal at the cell edge for which uplink coverage improvement is expected, and the coverage is ensured.

Note that, even for a terminal at the cell edge, there may be a situation where high received quality (for example, SINR: Signal-to-Interference Noise Ratio) needs to be ensured to transmit PUSCH due to an instant change of channel or interference environment. In such a case, when the transmission waveform is semi-statically configured (for example, when there is a limitation on the configuration), it is difficult for a terminal at the cell edge whose transmission waveform is configured to be DFT-s-OFDM, to switch the transmission waveform to CP-OFDM to perform high-efficiency transmission (for example, multi-layer transmission by MIMO spatial multiplexing or the like) in response to the instant change of channel or interference environment, and thus, the transmission efficiency of the terminal at the cell edge cannot be improved.

Further, for a terminal whose transmission waveform is configured to be CP-OFDM, there may be a situation in which the power efficiency needs to be improved to transmit PUSCH when the coverage is significantly reduced due to an instant change of channel or interference environment. In such a case, when the transmission waveform is semi-statically configured, it is difficult for the terminal whose transmission waveform is configured to be CP-OFDM to switch the transmission waveform to DFT-s-OFDM to improve the power efficiency in response to the instant change of channel or interference environment.

Therefore, in NR of Rel. 18, dynamically switching the transmission waveform (dynamic waveform switching) of PUSCH through the indication by DCI has been studied (for example, see NPL 3).

The power utilization efficiency differs between DFT-s-OFDM and CP-OFDM, and thus it is desirable to appropriately control the uplink transmission power in addition to the transmission waveform of the terminal in order to appropriately switch the transmission waveform of the terminal. In the dynamic switching of the transmission waveform, in order for the base station to appropriately control the transmission waveform and the uplink transmission power of the terminal, for example, the use of information on the uplink surplus power of the transmission waveform, which is a candidate for the dynamic switching, in addition to information on the uplink surplus power of the transmission waveform currently configured for the terminal, may be assumed.

For example, in the existing PHR, the terminal feeds back information on the uplink surplus power of the transmission waveform currently configured for the terminal, but does not feed back information on the uplink surplus power of a transmission waveform that is a candidate for dynamic switching.

In a non-limiting embodiment of the present disclosure, a method for transmitting information (or a feedback method) on surplus power in the uplink in dynamic switching of the transmission waveform in the uplink will be described.

In a non-limiting embodiment of the present disclosure, a terminal feeds back information on the surplus power of a transmission waveform that is not currently configured for the terminal, in addition to the feedback of the existing PHR, for example, information on the surplus power of a transmission waveform that is currently configured for the terminal. According to a non-limiting embodiment of the present disclosure, a base station can appropriately perform dynamic control of a transmission waveform for the terminal based on information from the terminal on the uplink surplus power of a transmission waveform that is a candidate for dynamic switching.

Hereinafter, non-limiting embodiments of the present disclosure will be described.

[Overview of Communication System]

A communication system according to each embodiment of the present disclosure includes, for example, at least one base station and at least one terminal.

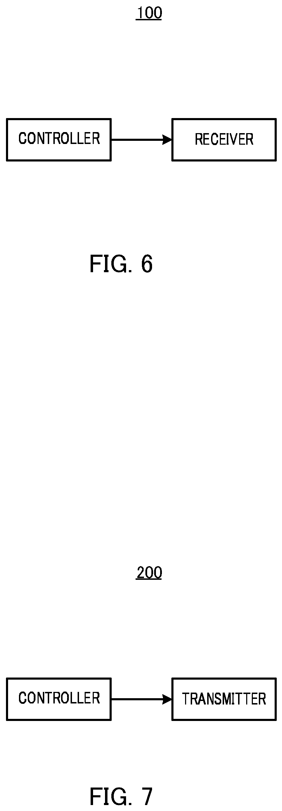

FIG. 6 is a block diagram illustrating a part of an exemplary configuration of base station 100 according to an embodiment of the present disclosure, and FIG. 7 is a block diagram illustrating a part of an exemplary configuration of terminal 200 according to an embodiment of the present disclosure.

In base station 100 illustrated in FIG. 6, a transmitter (corresponding to, for example, transmission circuitry) determines information on the reception of first information on surplus power for a first transmission configuration configured for terminal 200 and second information on surplus power for a second transmission configuration not configured for terminal 200. A receiver (corresponding to, for example, reception circuitry) receives the first information and the second information based on the information on the reception.

In terminal 200 illustrated in FIG. 7, a controller (corresponding to, for example, control circuitry) determines first information on surplus power for a first transmission configuration configured for terminal 200 and second information on surplus power for a second transmission configuration not configured for terminal 200. The transmitter (for example, transmission circuitry) transmits the first information and the second information.

(Embodiment 1)

In the present embodiment, terminal 200 may perform feedback of a PHR related to a transmission waveform that is not currently configured for terminal 200 in addition to feedback of the existing PHR (for example, PHR related to a transmission waveform currently configured for terminal 200). For example, the PHR related to a transmission waveform that is not currently configured for terminal 200 may include maximum transmission power $P_{CMAX,f,c}$ of a transmission waveform that is not currently configured for terminal 200 (for example, "$P_{CMAX,f,c,other}$").

Base station 100 may calculate the surplus transmission power of a transmission waveform that is a candidate for dynamic switching, using, for example, information included in the existing PHR and the maximum transmission power $P_{CMAX,f,c}$ for a transmission waveform that is not currently configured for terminal 200 (example will be described later).

Note that the following method for calculating the surplus transmission power is merely an example, and the method for calculating the surplus transmission power in the operation of dynamic switching of the transmission waveform in base station 100 or how to use information on the surplus transmission power for the dynamic switching of the transmission waveform may be dependent on the implementation of base station 100.

For example, base station 100 calculates the surplus transmission power of the transmission waveform currently configured for terminal 200 based on the value of PH included in the existing PHR. A power reduction value TotalPowerReduction$_{current}$ of the transmission waveform currently configured for terminal 200 may be calculated according to the following Equation 1.

$$TotalPowerReduction_{current} = \left(P_{CMAX,H,f,c} - P_{CMAX,f,c,current}\right) + PH$$

$$\dots \text{(Equation 1)}$$

$P_{CMAX,H,f,c}$ herein represents the value of the maximum transmission power of terminal 200 that can be known by base station 100 (see, for example, NPL 10). Further, $P_{CMAX,f,c,current}$ represents the maximum transmission power applied by terminal 200 to the transmission waveform currently configured for terminal 200, and is given by, for example, the $P_{CMAX,f,c}$ field of the PHR (for example, the existing PHR) illustrated in FIG. 1. Further, PH represents the value of PH given by the PH field in the PHR (for example, the existing PHR) illustrated in FIG. 1.

For example, ActualCurrentTxPower of the actual terminal that can be known by base station 100 may be calculated according to the following Equation 2.

$$ActualCurrentTxPower = P_{CMAX,H,f,c} - TotalPowerReduction_{current} \qquad \dots \text{(Equation 2)}$$

Here, when the maximum transmission power that can be applied by terminal 200 to a transmission waveform not currently configured for terminal 200 is "PCMAX,f,c,other," the surplus transmission power of the transmission waveform not currently configured for terminal 200 may be calculated according to the following Equation 3.

$$PossiblePowerMargin_{other} = P_{CMAX,f,c,ohter} - ActualCurrentTxPower$$

$$\dots \text{(Equation 3)}$$

As described above, by terminal 200 feeding back the maximum transmission power $P_{CMAX,f,c,other}$ of a transmission waveform that is not currently configured for terminal 200 in addition to the existing PHR, base station 100 can compare the surplus transmission power of a transmission waveform that is currently configured for terminal 200 (for example, PH or TotalPowerReduction$_{current}$) and the surplus transmission power of a transmission waveform that is not currently configured for terminal 200 (for example, PossiblePowerMargin$_{other}$). Base station 100 can configure an appropriate transmission waveform for terminal 200 based on, for example, the comparison of the surplus transmission power of the transmission waveforms.

[Method for Feeding Back Maximum Transmission Power of Transmission Waveform Not Currently Configured for Terminal 200]

Hereinafter, exemplary methods for feeding back the maximum transmission power of a transmission waveform that is not currently configured for terminal 200 will be described.

<Feedback Method 1>

Maximum transmission power $P_{CMAX,f,c}$ of a transmission waveform that is not currently configured for terminal 200 (for example, $P_{CMAX,f,c,other}$) may be fed back from terminal 200 to base station 100, for example, by a MAC CE.

For example, in a case where dynamic switching of the transmission waveform in the uplink (dynamic waveform switching) is enabled, terminal 200 may feed back a **PHR** MAC CE for a transmission waveform that is not currently configured for terminal 200 in addition to the existing **PHR** MAC CE.

For example, in a case where the dynamic switching of the transmission waveform in the uplink is enabled, terminal 200 may transmit the maximum transmission power $P_{CMAX,f,c}$ for the transmission waveform currently configured for terminal 200 (for example, $P_{CMAX,f,c,current}$) using the existing PHR MAC CE, and may transmit the maximum transmission power $P_{CMAX,f,c}$ for the transmission waveform not currently configured for terminal 200 (for example, $P_{CMAX,f,c,other}$) using a PHR MAC CE with the same configuration as the existing PHR MAC CE.

The PHR MAC CE for the transmission waveform that is not currently configured for terminal 200 may be configured, for example, by replacing each field value of the existing PHR MAC CE illustrated in FIG. 1 with a value calculated based on the transmission waveform that is not currently configured for terminal 200.

By feedback method 1, terminal 200 can feed back the maximum transmission power $P_{CMAX,f,c}$ of a transmission waveform that is not currently configured for terminal 200 (for example, $P_{CMAX,f,c,other}$) without changing the configuration of the existing PHR.

<Feedback Method 2>

For example, in a case where the dynamic switching of the transmission waveform in the uplink is enabled, terminal 200 may transmit the maximum transmission power $P_{CMAX,f,c}$ for a transmission waveform that is not currently configured for terminal 200 (for example, $P_{CMAX,f,c,other}$) using a PHR MAC CE obtained by adding a field of n bytes (n is a positive integer) to the existing PHR MAC CE (for example, PHR MAC CE for transmitting the maximum transmission power $P_{CMAX,f,c}$ for a transmission waveform that is currently configured for terminal 200 (for example, $P_{CMAX,f,c,current}$)).

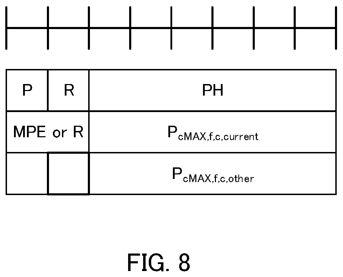

For example, in a case where the dynamic switching of the transmission waveform in the uplink is enabled, terminal 200 may, as shown in FIG. 8, add one byte (n = 1, eight bits) to the existing PHR MAC CE and feed back the maximum transmission power $P_{CMAX,f,c}$ for a transmission waveform that is not currently configured for terminal 200 (for example, $P_{CMAX,f,c,other}$).

Here, the number of bits of the field for the maximum transmission power $P_{CMAX,f,c}$ of a transmission waveform that is not currently configured for terminal 200 (for example, $P_{CMAX,f,c,other}$) may be the same six bits as the field of $P_{CMAX,f,c}$ in the existing PHR (for example, $P_{CMAX,f,c,current}$), or may be the number of bits different from six bits (for example, any of one bit or more and eight bits or less). For example, of the additional eight bits, a field different from the $P_{CMAX,f,c}$ (for example, $P_{CMAX,f,c,other}$) field may be configured as Reserved bits, or may be configured as a field for feeding back another parameter (for example, P or MPE for a transmission waveform that is not currently configured for terminal 200).

Further, the PHR MAC CE for a transmission waveform that is not currently configured for terminal 200 may include a field that indicates whether the feedback of the maximum transmission power $P_{CMAX,f,c}$ for a transmission waveform that is not currently configured for terminal 200 (for example, $P_{CMAX,f,c,other}$) is included in the MAC CE.

The overhead of the feedback can be reduced by feedback method 2 compared to the case where a PHR MAC CE for a transmission waveform that is not currently configured for terminal 200 is fed back in addition to the existing PHR MAC CE (for example, a case where PHR MAC CEs for the number of candidates for a transmission waveform are fed back), for example.

<Feedback Method 3>

For example, in a case where the dynamic switching of the transmission waveform in the uplink is enabled, terminal 200 may transmit the maximum transmission power $P_{CMAX,f,c}$ for a transmission waveform that is not currently configured for terminal 200 (for example, $P_{CMAX,f,c,other}$) using a part of the field in the existing PHR MAC CE (for example, PHR MAC CE for transmitting the maximum transmission power $P_{CMAX,f,c}$ for a transmission waveform that is currently configured for terminal 200 (for example, $P_{CMAX,f,c,current}$)).

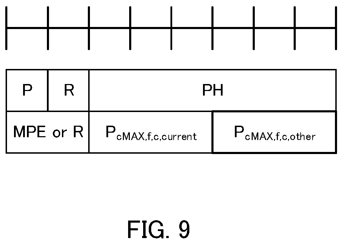

For example, in a case where the dynamic switching of the transmission waveform in the uplink is enabled, terminal 200 may, as illustrated in FIG. 9, feed back the maximum transmission power $P_{CMAX,f,c}$ of a transmission waveform that is not currently configured for terminal 200 (for example, $P_{CMAX,f,c,other}$) using a part of the field of $P_{CMAX,f,c}$ (for example, $P_{CMAX,f,c,current}$) in the existing PHR MAC CE.

For example, as illustrated in FIG. 9, the field (for example, six bits) of $P_{CMAX,f,c}$ in the existing PHR MAC CE illustrated in FIG. 1 may be divided into X bits for indicating the maximum transmission power $P_{CMAX,f,c}$ of a transmission waveform currently configured for terminal 200 (for example, $P_{CMAX,f,c,current}$) and 6-X bits for indicating the maximum transmission power $P_{CMAX,f,c}$ of a transmission waveform not currently configured for terminal 200 (for example, $P_{CMAX,f,c,other}$).

By feedback method 3, terminal 200 can feed back the maximum transmission power $P_{CMAX,f,c}$ of a transmission waveform that is not currently configured for terminal 200 (for example, $P_{CMAX,f,c,other}$) without changing the size of the existing PHR MAC CE.

Note that FIG. 9 illustrates an example in which X = 3 bits and Y = 3 bits, but the values of X and Y are not limited to these and may be other values.

Further, in the existing PHR MAC CE, the field to be used for the transmission of the maximum transmission power $P_{CMAX,f,c}$ of a transmission waveform that is not currently configured for terminal 200 (for example, $P_{CMAX,f,c,other}$) is not limited to a part of the field of $P_{CMAX,f,c}$, and may be another field (for example, PH, MPE, or Reserved field), or may be a field obtained by combining a part of the field of $P_{CMAX,f,c}$ and a part of another field.

<Feedback Method 4>

For example, the maximum transmission power $P_{CMAX,f,c}$ of a transmission waveform that is not currently configured for terminal 200 (for example, $P_{CMAX,f,c,other}$) may be fed back using uplink control information (UCI).

The UCI including the maximum transmission power $P_{CMAX,f,c}$ of a transmission waveform that is not currently configured for terminal 200 (for example, $P_{CMAX,f,c,other}$) may be multiplexed with PUSCH and transmitted from terminal 200 to base station 100, or may be transmitted from terminal 200 to base station 100 on PUCCH.

By feedback method 4, terminal 200 can feed back the maximum transmission power $P_{CMAX,f,c}$ of a transmission waveform that is not currently configured for terminal 200 (for example, $P_{CMAX,f,c,other}$) without enhancing or changing the feedback function of the existing PHR MAC CE.

The above describes exemplary methods for feeding back the maximum transmission power $P_{CMAX,f,c}$ of a transmission waveform that is not currently configured for terminal 200 (for example, $P_{CMAX,f,c,other}$).

Note that, for example, at least two of feedback methods 1 to 4 may be switched and applied depending on an indication from base station 100 or the configuration of terminal 200.

[Method for Triggering Feedback of Maximum Transmission Power of Transmission Waveform Not Currently Configured for Terminal 200]

Hereinafter, exemplary methods for triggering feedback of the maximum transmission power of a transmission waveform that is not currently configured for terminal 200 will be described.

<Trigger Method 1>

For example, a condition for triggering the feedback of the maximum transmission power $P_{CMAX,f,c}$ of a transmission waveform that is not currently configured for terminal 200 (for example, $P_{CMAX,f,c,other}$) may be the same as the condition for triggering the feedback of the existing PHR MAC CE.

For example, in a case where the dynamic switching of the transmission waveform in the uplink is enabled, terminal 200 may also feed back the maximum transmission power $P_{CMAX,f,c}$ of a transmission waveform that is not currently configured for terminal 200 (for example, $P_{CMAX,f,c,other}$) at the same time (for example, in the same time unit) as the feedback of the existing PHR MAC CE.

The condition for triggering the existing PHR MAC CE may be, for example, when the phy-PeriodicTimer expires, or when the measured path loss changes by a value greater than a threshold (for example, phr-Tx-PowerFactorChange) (see, for example, NPL 8). Note that the condition for triggering the PHR MAC CE is not limited thereto and may be another condition.

<Trigger Method 2>

For example, the condition for triggering the feedback of the maximum transmission power $P_{CMAX,f,c}$ of a transmission waveform that is not currently configured for terminal 200 (for example, $P_{CMAX,f,c,other}$) may be different from the condition for triggering the feedback of the existing PHR MAC CE.

For example, as a condition for triggering the feedback of the maximum transmission power $P_{CMAX,f,c}$ of a transmission waveform that is not currently configured for terminal 200 (for example, $P_{CMAX,f,c,other}$), a condition based on a timer (for example, a timer "phy-PeriodicTimer") related to a period different from that of the existing PHR MAC CE may be configured. Alternatively, as a condition for triggering feedback of the maximum transmission power $P_{CMAX,f,c}$ of a transmission waveform that is not currently configured for terminal 200 (for example, $P_{CMAX,f,c,other}$), a condition based on a path loss different from that of the existing PHR MAC CE (for example, a threshold "phr-Tx-PowerFactorChange") may be configured.

Further, a condition based on the difference (for example, a threshold for the difference) between the surplus transmission power of the transmission waveform currently configured for terminal 200 and the surplus transmission power of the transmission waveform not currently configured for terminal 200 may be newly configured. For example, when the difference in the surplus transmission power exceeds a threshold, the feedback of the maximum transmission power $P_{CMAX,f,c}$ of the transmission waveform that is not currently configured for terminal 200 (for example, $P_{CMAX,f,c,other}$) may be triggered.

<Trigger Method 3>

For example, whether to feed back the maximum transmission power $P_{CMAX,f,c}$ of a transmission waveform that is not currently configured for terminal 200 (for example, $P_{CMAX,f,c,other}$) may be dynamically indicated to terminal 200 from base station 100 by DCI.

Exemplary methods for triggering feedback of the maximum transmission power of a transmission waveform that is not currently configured for terminal 200 have been described above.

Note that, for example, at least two of Trigger Methods 1 to 3 may be switched and applied depending on an indication from base station 100 or the configuration of terminal 200.

As described above, in the present embodiment, terminal 200 determines information on the surplus transmission power (for example, including the maximum transmission power) for the transmission waveform (for example, an example of the transmission configuration) currently configured for terminal 200 and information on the surplus transmission power (for example, including the maximum transmission power) for the transmission waveform not currently configured for terminal 200, and feeds back the information to base station 100.

Thus, for example, in a case where the dynamic switching of the transmission waveform in the uplink is applied, base station 100 can use information on the uplink surplus power of a transmission waveform that is a candidate for dynamic switching (for example, transmission waveform that is not currently configured for terminal 200) in addition to information on the uplink surplus power of the transmission waveform that is currently configured for terminal 200. Thus, base station 100 can appropriately control the switching of the transmission waveform and the uplink transmission power of terminal 200 based on information on the uplink surplus power for each transmission waveform.

Thus, according to the present embodiment, terminal 200 can appropriately transmit a signal in the uplink.

(Variation of Embodiment 1)

In the present embodiment, instead of feeding back the maximum transmission power $P_{CMAX,f,c}$ of a transmission waveform that is not currently configured for terminal 200 (for example, $P_{CMAX,f,c,other}$), the difference from the maximum transmission power $P_{CMAX,f,c}$ of a transmission waveform that is currently configured for terminal 200 (for example, $P_{CMAX,f,c,current}$), for example, $P_{CMAX,f,c,current} - P_{CMAX,f,c,other}$, may be fed back. According to the variation, the overhead can be reduced compared to the case where an absolute value of the maximum transmission power $P_{CMAX,f,c}$ (for example, $P_{CMAX,f,c,other}$) is fed back. Further, the variation makes it possible to feed back more information in the same size than the case of feeding back the absolute value of the maximum transmission power $P_{CMAX,f,c}$ (for example, $P_{CMAX,f,c,other}$), thereby increasing the granularity of the power level.

(Embodiment 2)

The existing PHR may be configured based also on another transmission configuration (for example, modulation scheme and/or frequency domain resource allocation) in addition to the transmission waveform. For example, terminal 200 determines the value of each field of the PHR (for example, PH and maximum transmission power $P_{CMAX,f,c}$) using the transmission configuration of the PUSCH for feeding back the PHR MAC CE.

It is sufficient to use the existing PHR in a case where base station 100 applies the same transmission configuration (for example, modulation scheme or frequency domain resource allocation) as the transmission configuration for a certain PUSCH allocation to a subsequent PUSCH allocation, but in this case, there is a possibility that a flexible PUSCH allocation cannot be performed.

For example, the power reduction value of terminal 200 may vary depending on the modulation scheme or the frequency resource allocation in addition to depending on the transmission waveform. For this reason, there is a possibility that base station 100 cannot accurately calculate the surplus transmission power only by the existing PHR in a case where PUSCH is allocated with a transmission configuration different from the currently configured PUSCH transmission configuration.

Then, in the present embodiment, terminal 200 feeds back, in addition to the feedback of the existing PHR (for example, including the maximum transmission power of the transmission configuration currently configured for terminal 200), the maximum transmission power $P_{CMAX,f,c}$ of a transmission configuration that is not currently configured for terminal 200.

The transmission configuration may herein include, for example, at least one of a transmission waveform, a modulation scheme, the number of allocation resource blocks (RBs), or an allocation RB position (for example, Edge BR allocation, Outer RB allocation, Inner RB allocation).

According to the present embodiment, terminal 200 feeds back maximum transmission power $P_{CMAX,f,c}$ of a transmission configuration that is not currently configured for terminal 200 in addition to the existing PHR. Thus, base station 100 can, for example, use (for example, compare) the surplus transmission power of the transmission configuration currently configured for terminal 200 and the surplus transmission power of the transmission configuration not currently configured for terminal 200. For example, base station 100 can appropriately allocate a PUSCH to which the transmission configuration is applied to terminal 200 based on the comparison between the surplus transmission power for the transmission configurations.

For example, the transmission configuration for feeding back $P_{CMAX,f,c}$ may be predetermined in the standard. For example, a transmission configuration for feeding back $P_{CMAX,f,c}$ (for example, referred to as "reference transmission configuration") may be determined in the standard. In this case, terminal 200 may feed back the maximum transmission power $P_{CMAX,f,c,reference}$ of the reference transmission configuration in addition to the existing PHR (including, for example, $P_{CMAX,f,c}$ of the transmission configuration currently configured for terminal 200). Note that, for example, in a case where the transmission configuration currently configured for terminal 200 is the same as the reference transmission configuration, terminal 200 may disable the feedback of the maximum transmission power $P_{CMAX,f,c,reference}$ of the reference transmission configuration.

Further, for example, the transmission configuration for feeding back $P_{CMAX,f,c}$ may be configured for terminal 200 by RRC. For example, the reference transmission configuration may be configured for terminal 200 by the RRC. In this case, terminal 200 may feed back the maximum transmission power $P_{CMAX,f,c,reference}$ of the reference transmission configuration in addition to the existing PHR (including, for example, $P_{CMAX,f,c}$ of the transmission configuration currently configured for terminal 200). Note that, in a case where the transmission configuration currently configured for terminal 200 is the same as the reference transmission configuration, terminal 200 may disable the feedback of the maximum transmission power $P_{CMAX,f,c,reference}$ of the reference transmission configuration.

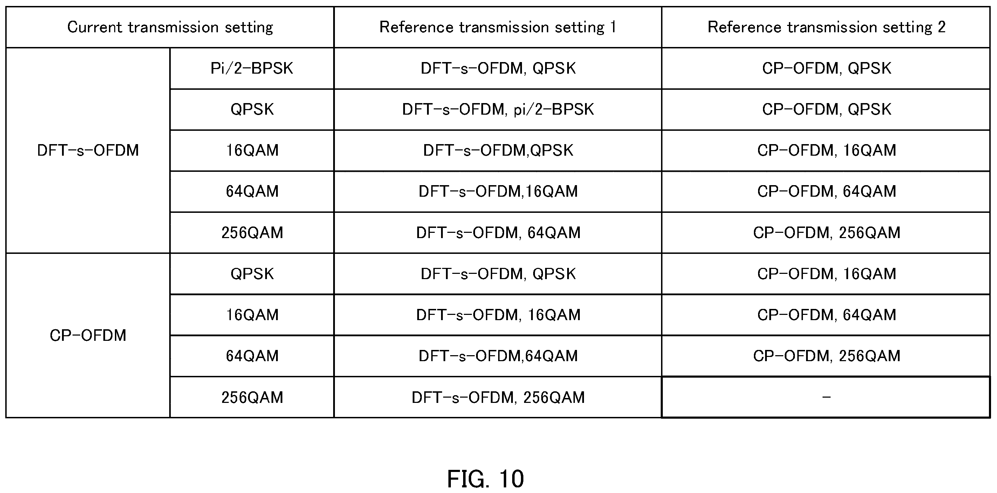

Further, for example, the reference transmission configuration may vary depending on the transmission configuration currently configured for terminal 200. FIG. 10 is a diagram illustrating an example of the relationship between the transmission configuration currently configured for terminal 200 and the reference transmission configuration. The relationship between the transmission configuration currently configured for terminal 200 and the reference transmission configuration may be predetermined in the standard or may be configured for terminal 200 by RRC.

Further, there may be a plurality of reference transmission configurations. Terminal 200 may, for example, feed back maximum transmission power $P_{CMAX,f,c,reference}$ for all reference transmission configurations, or may feedback maximum transmission power $P_{CMAX,f,c,reference}$ for one or some of the reference transmission configurations from a plurality of reference transmission configurations. The $P_{CMAX,f,c,reference}$ of which reference transmission configuration among the plurality of reference transmission configurations is fed back may be indicated from base station 100 to terminal 200, or may be determined by terminal 200.

The method for feeding back the maximum transmission power $P_{CMAX,f,c}$ of a transmission configuration that is not currently configured for terminal 200 (for example, $P_{CMAX,f,c,reference}$), and the method for triggering the feedback may be the same as those in Embodiment 1.

As described above, in the present embodiment, terminal 200 determines information on the surplus transmission power for the transmission configuration currently configured for terminal 200 (for example, including the maximum transmission power) and information on the surplus transmission power for the transmission configuration not currently configured for terminal 200 (for example, including the maximum transmission power), and feeds back the information to base station 100.

Thus, for example, in a case where dynamic switching of the transmission waveform in the uplink is applied, base station 100 can use information on the uplink surplus power that depends on the transmission waveform that is a candidate for the dynamic switching and another transmission configuration (for example, modulation scheme or frequency resource allocation), in addition to the information on the uplink surplus power of the transmission configuration currently configured for terminal 200. Thus, base station 100 can accurately calculate the surplus transmission power even in a case where PUSCH is allocated with a transmission configuration different from the currently configured transmission configuration of PUSCH, and can appropriately control the switching of the transmission waveform and the uplink transmission power of terminal 200.

Thus, according to the present embodiment, terminal 200 can appropriately transmit a signal in the uplink.

The embodiments according to a non-limiting example of the present disclosure have been each described, thus far.

[Operation Example of Terminal 200]

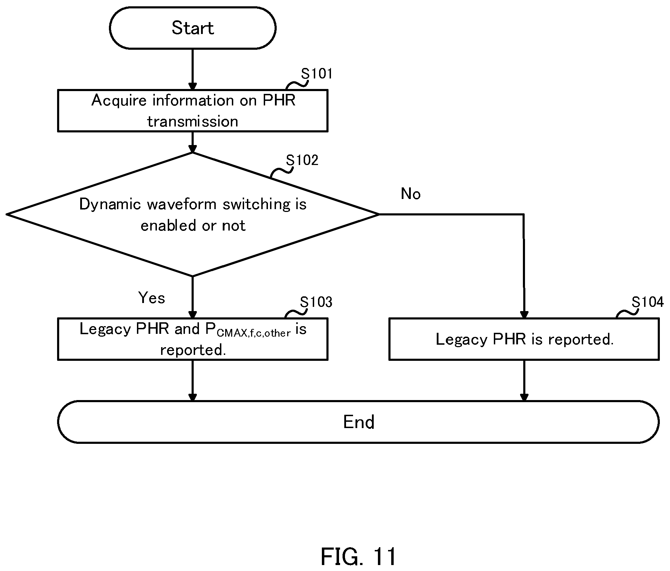

FIG. 11 is a flowchart illustrating an operation example of terminal 200.

In FIG. 11, terminal 200 acquires information on PHR transmission (S101). The information on PHR transmission may include, for example, information on a trigger for PHR transmission (for example, a timer, a threshold for path loss, and the like), and information on the content of PHR (for example, a threshold for P-MPR, a reference transmission configuration, and the like).

Terminal 200 determines whether dynamic switching of the transmission waveform in the uplink (dynamic waveform switching) is enabled or disabled (S102). Whether the dynamic switching of the transmission waveform in the uplink is enabled may be configured (or indicated) from base station 100 to terminal 200, or may be configured based on the capability of terminal 200.

In a case where the dynamic switching of the transmission waveform in the uplink is enabled (S102: Yes), terminal 200 reports, to base station 100, the maximum transmission power $P_{CMAX,f,c}$ (for example, $P_{CMAX,f,c,other}$ or $P_{CMAX,f,c,reference}$) corresponding to a transmission configuration (for example, a transmission waveform or a transmission waveform and another parameter) that is not currently configured for terminal 200 (S103), in addition to the existing PHR (legacy PHR).

In a case where the dynamic switching of the transmission waveform in the uplink is disabled (S102: No), on the other hand, terminal 200 reports the legacy PHR to base station 100 (S104).

[Configuration of Base Station]

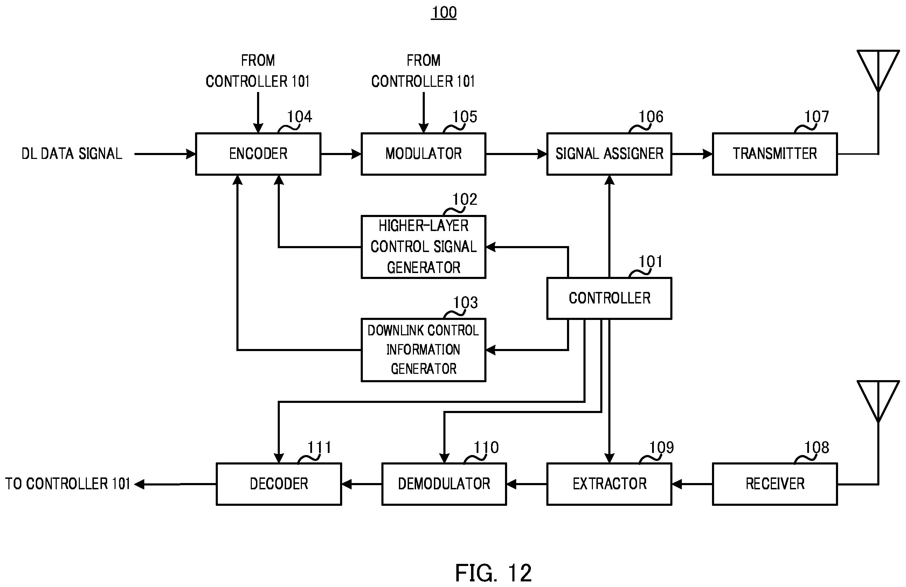

FIG. 12 is a block diagram illustrating a configuration example of base station 100 according to Embodiment 1. In FIG. 12, base station 100 includes controller 101, higher-layer control signal generator 102, downlink control information generator 103, encoder 104, modulator 105, signal assigner 106, transmitter 107, receiver 108, extractor 109, demodulator 110, and decoder 111.

Note that, at least one of controller 101, higher-layer control signal generator 102, downlink control information generator 103, encoder 104, modulator 105, signal assigner 106, extractor 109, demodulator 110, and decoder 111 illustrated in FIG. 12 may be included in the controller illustrated in FIG. 6. Further, receiver 108 illustrated in FIG. 12 may be included in the receiver illustrated in FIG. 6.

Controller 101 determines, for example, information on PUSCH transmission and information on PHR transmission (or information on PHR reception) based on information inputted from decoder 111, and outputs the determined information to at least one of higher-layer control signal generator 102 and downlink control information generator 103. The information on PUSCH transmission may include, for example, information on a transmission waveform, resource allocation information, or information on a Modulation and Coding Scheme (MCS). Further, controller 101 outputs the determined information to extractor 109, demodulator 110, and decoder 111.

Further, controller 101 determines, for example, information on a downlink signal for transmitting a higher-layer control signal or downlink control information (for example, MCS and radio resource allocation), and outputs the determined information to encoder 104, modulator 105, and signal assigner 106. Further, controller 101 outputs the information on the downlink signal (for example, a data signal or a higher-layer control signal) to downlink control information generator 103, for example.

Higher-layer control signal generator 102 generates a higher-layer control signal bit sequence, for example, based on the information inputted from controller 101, and outputs the higher-layer control signal bit sequence to encoder 104.

Downlink control information generator 103 generates a downlink control information (for example, DCI) bit sequence, for example, based on the information inputted from controller 101, and outputs the generated DCI bit sequence to encoder 104. Note that, the control information may be sometimes transmitted to a plurality of terminals.

Encoder 104 encodes, for example, a downlink data signal, the bit sequence inputted from higher-layer control signal generator 102, or the DCI bit sequence inputted from downlink control information generator 103 based on the information inputted from controller 101. Encoder 104 outputs the encoded bit sequence to modulator 105.

Modulator 105 modulates the encoded bit sequence inputted from encoder 104, for example, based on the information inputted from controller 101, and outputs the modulated signal (for example, a symbol sequence) to signal assigner 106.

Signal assigner 106 maps the symbol sequence (for example, including a downlink data signal or a control signal) inputted from modulator 105 to a radio resource based on the information indicating the radio resource inputted from controller 101, for example. Signal assigner 106 outputs, to transmitter 107, the downlink signal whose signal has been mapped.

Transmitter 107 performs, for example, transmission waveform generation processing such as orthogonal frequency division multiplexing (OFDM), on the signal inputted, for example, from signal assigner 106. Further, for example, in the case of an OFDM transmission in which a cyclic prefix (CP) is added, transmitter 107 performs Inverse Fast Fourier Transform (IFFT) processing on the signal, and adds a CP to the signal after the IFFT. Further, transmitter 107 performs, for example, RF processing such as D/A conversion or up-conversion on the signal, and transmits a radio signal to terminal 200 via an antenna.

Receiver 108, for example, performs RF processing such as down-conversion or A/D conversion on the uplink signal received from terminal 200 through an antenna. Further, in the case of an OFDM transmission, receiver 108 performs Fast Fourier Transform (FFT) processing on the received signal, for example, and outputs the obtained frequency domain signal to extractor 109.

Extractor 109 extracts, for example, a radio resource portion in which an uplink signal (for example, PUSCH or PUCCH) has been transmitted, from the received signal inputted from receiver 108 based on the information inputted from controller 101, and outputs the extracted radio resource portion to demodulator 110.

Demodulator 110 demodulates the uplink signal (for example, PUSCH or PUCCH) inputted from extractor 109 based on the information inputted from controller 101, for example. Demodulator 110 outputs, for example, the demodulation result to decoder 111.

Decoder 111 performs error correction decoding of the uplink signal (for example, PUSCH or PUCCH) based on the information inputted from controller 101 and the demodulation result inputted from demodulator 110, and obtains a decoded reception bit sequence. Decoder 111 outputs, in a case where the decoded reception bit sequence includes a PHR, information on the PHR to controller 101, for example.

[Configuration of Terminal]

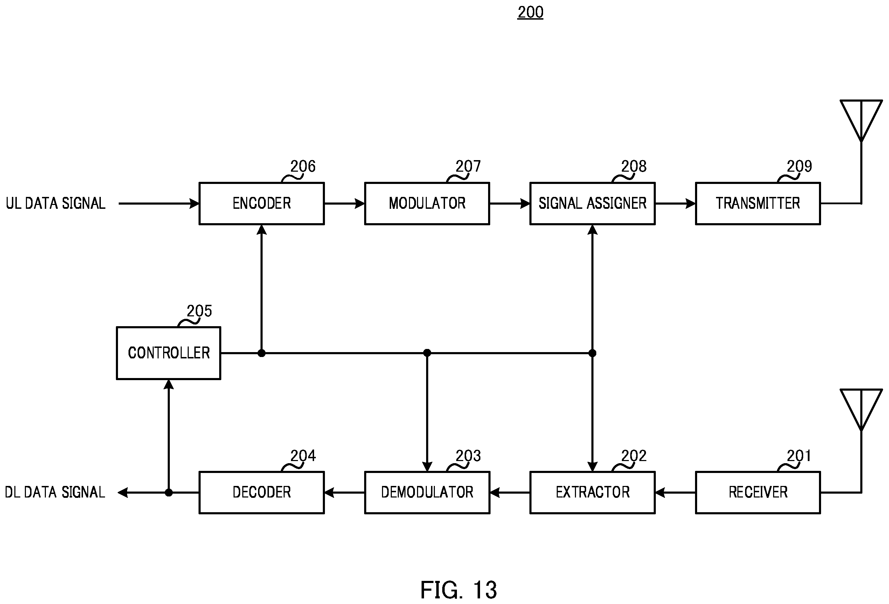

FIG. 13 is a block diagram illustrating an exemplary configuration of terminal 200 according to an embodiment of the present disclosure. For example, in FIG. 13, terminal 200 includes receiver 201, extractor 202, demodulator 203, decoder 204, controller 205, encoder 206, modulator 207, signal assigner 208, and transmitter 209.

Note that, at least one of extractor 202, demodulator 203, decoder 204, controller 205, encoder 206, modulator 207, and signal assigner 208 illustrated in FIG. 13 may be included in the controller illustrated in FIG. 7. Further, transmitter 209 illustrated in FIG. 13 may be included in the transmitter illustrated in FIG. 7.

Receiver 201 receives a downlink signal (for example, a downlink data signal or downlink control information) from base station 100 via an antenna, performs RF processing such as down-conversion or A/D conversion on the received radio signal, and obtains a received signal (baseband signal). Further, when receiver 201 receives an OFDM signal, receiver 201 performs FFT processing on the received signal and converts the received signal into the frequency domain. Receiver 201 outputs the received signal to extractor 202.

Extractor 202 extracts, for example, based on information on a radio resource of downlink control information, which is inputted from controller 205, a radio resource portion which may include downlink control information, from the received signal inputted from receiver 201, and outputs the radio resource portion to demodulator 203. Further, extractor 202 extracts a radio resource portion including a downlink data signal based on information on a radio resource of the data signal inputted from controller 205, and outputs the radio resource portion to demodulator 203.

Demodulator 203 demodulates, for example, based on information inputted from controller 205, the signal inputted from extractor 202 (for example, PDCCH or PDSCH), and outputs the demodulation result to decoder 204.

Decoder 204 performs, for example, error correction decoding of PDCCH or PDSCH using the demodulation result inputted from demodulator 203, and obtains, for example, a higher-layer control signal or downlink control information. Decoder 204 outputs the higher-layer control signal and the downlink control information to controller 205. Further, decoder 204 may generate a response signal (for example, ACK/NACK) based on the decoding result of the PDSCH.

Controller 205 performs uplink transmission control (for example, determination of a transmission waveform for PUSCH transmission, whether a PHR is transmitted, and/or information included in the PHR) based on the information on PUSCH transmission or the information on PHR transmission obtained from the signal (for example, higher-layer control signal or downlink control information) inputted from decoder 204. Controller 205 outputs the determined information to, for example, encoder 206 and signal assigner 208.

Encoder 206 encodes an uplink data signal (UL data signal) or an uplink control signal based on the information inputted from controller 205, for example. Encoder 206 outputs the encoded bit sequence to modulator 207.

Modulator 207 modulates, for example, the encoded bit sequence inputted from encoder 206, and outputs the modulated signal (symbol sequence) to signal assigner 208.

Signal assigner 208 maps the signal (for example, sequence) inputted from modulator 207 to a radio resource, for example, based on the information inputted from controller 205. Signal assigner 208 outputs, to transmitter 209, the uplink signal whose signal has been mapped, for example.

Transmitter 209 performs generation of a transmission signal waveform, such as OFDM, on the signal inputted from signal assigner 208. Further, in the case of an OFDM transmission using a CP, for example, transmitter 209 performs IFFT processing on the signal and adds a CP to the signal after the IFFT. Alternatively, when transmitter 209 generates a single carrier waveform, a DFT processor may be added downstream of modulator 207 or upstream of signal assigner 208 (not illustrated), for example. Further, transmitter 209 performs, for example, RF processing such as D/A conversion and up-conversion on the transmission signal, and transmits the radio signal to base station 100 via an antenna.

(Other Embodiments)

Note that, in each of the embodiments described above, the transmission waveform is not limited to the two types of DFT-s-OFDM and CP-OFDM, and may be another transmission waveform, and further, the number of types of the transmission waveforms that can be applied may be three or more. In a case where three or more types of transmission waveforms are applicable, the feedback method described in each of the above embodiments may be enhanced. For example, in a case where there are three types of candidates for the transmission waveform, two bytes (for example, 8 bits + 8 bits) may be added to the existing PHR MAC CE in FIG. 8.

Further, the unit in the calculation of the power value in each of the embodiments described above may be a true value (linear domain) or a dB unit (log domain).

Further, in each of the embodiments described above, the channel used for uplink transmission is not limited to PUSCH and PUCCH, and may be another channel. Further, the type of information to be transmitted is not limited to data, and may be information of another type (for example, an uplink control signal). Further, an exemplary embodiment of the present disclosure is not limited to the uplink transmission, but may be applied to downlink transmission or sidelink transmission.

Further, in Embodiment 1 described above, terminal 200 may calculate information on surplus transmission power for a transmission waveform that is not currently configured for terminal 200 by making the transmission configuration for the calculation of the information on surplus transmission power for the transmission waveform that is not currently configured for terminal 200 the same as the transmission configuration for the transmission waveform that is currently configured for terminal 200 (for example, modulation scheme, the number of allocated resource blocks (RBs), the number of transmission layers, and the like) except for the transmission waveform. Further, in a case where the transmission waveform that is not currently configured does not support the transmission configuration of the transmission waveform that is currently configured, terminal 200 need not calculate or need not feed back information on the surplus transmission power for the transmission waveform that is not currently configured.

Further, the power value, the number of bits in the field, the arrangement of the field, and the like illustrated in the present disclosure are merely examples, and other values or configurations may be used.

The present disclosure may be applied to, for example, communication between terminals, such as sidelink communication.

Further, in the present disclosure, a downlink control channel, a downlink data channel, an uplink control channel, and an uplink data channel are not limited to PDCCH, PDSCH, PUCCH, and PUSCH, respectively, and may be control channels having other names.

Further, in the present disclosure, the RRC signaling is assumed for the higher layer signaling, but the signaling may be replaced with Medium Access Control (MAC) signaling and indication by a DCI that is physical layer signaling.

Further, the present disclosure may be applied only to PUSCH (Dynamic grant-PUSCH) scheduled by DCI, and need not be applied to Configured grant PUSCH. Alternatively, the present disclosure may be applied to both Dynamic grant-PUSCH and Configured grant-PUSCH.

(Complement)

Information indicating whether terminal 200 supports the functions, operations, or pieces of processing that have been indicated in the above-mentioned embodiments and complements may be transmitted (or indicated) from terminal 200 to base station 100, as capability information or a capability parameter for terminal 200, for example.

The capability information may include information elements (IEs) that individually indicate whether terminal 200 supports at least one of the functions, operations, or pieces of processing that have been described in the above-mentioned embodiments, variations, and complements. Alternatively, the capability information may include information elements that indicate whether terminal 200 supports a combination of any two or more of the functions, operations, or pieces of processing that have been described in the above-mentioned embodiments, variations, and complements.

Base station 100 may determine (or decide or assume), for example, based on the capability information received from terminal 200, the functions, operations, or processes that are supported (or not supported) by terminal 200, which is a transmission source of the capability information. Base station 100 may execute operations, processes, or control in accordance with a determination result based on the capability information. For example, base station 100 may control uplink-related processing based on the capability information received from terminal 200.

Note that in a case where terminal 200 does not entirely support the functions, operations, or pieces of processing described in the above-mentioned embodiments, variations, and complements, such an unsupported part of the functions, operations, or processes may be interpreted as a limitation in terminal 200. For example, information or a request relating to such limitation may be indicated to base station 100.

The information on the capability or the limitation of terminal 200 may be defined by standards or may be implicitly indicated to base station 100 in association with information known in base station 100 or information to be transmitted to base station 100, for example.

The embodiments, the variations, and the complements according to a non-limiting and exemplary embodiment of the present disclosure have been each described, thus far.

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, the base station may be replaced with a terminal. The base station may be a relay apparatus that relays communication between a higher node and a terminal. The base station may be a roadside unit as well.

(Uplink/Downlink/Sidelink)

The present disclosure may be applied to any of uplink, downlink and sidelink. The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large latency compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

<5G NR System Architecture and Protocol Stack>

3GPP has been working on the next release for the 5th generation cellular technology (simply called "5G"), including the development of a new radio access technology (NR) operating in frequencies ranging up to 100 GHz. The first version of the 5G standard was completed at the end of 2017, which allows proceeding to 5G NR standard-compliant trials and commercial deployments of terminals (e.g., smartphones).

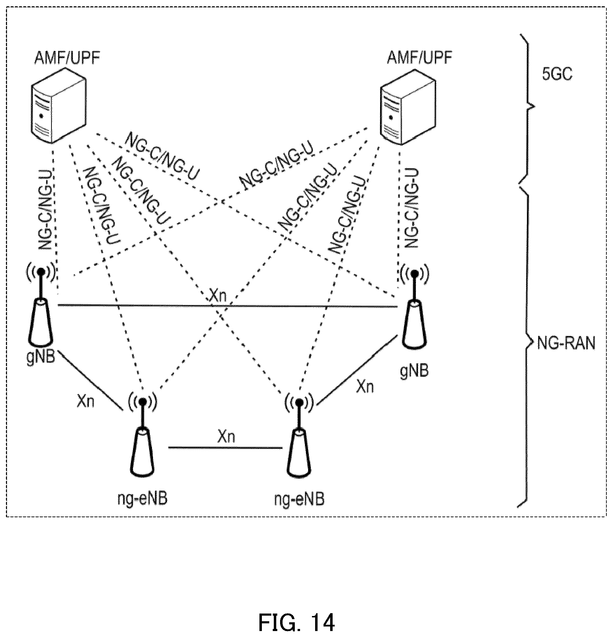

For example, the overall system architecture assumes an NG-RAN (Next Generation-Radio Access Network) that includes gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g., a particular core entity performing the AMF) by means of the NG-C interface and to the UPF (User Plane Function) (e.g., a particular core entity performing the UPF) by means of the NG-U interface. The NG-RAN architecture is illustrated in FIG. 14 (see e.g., 3GPP TS 38.300 v15.6.0, section 4).

The user plane protocol stack for NR (see e.g., 3GPP TS 38.300, section 4.4.1) includes the PDCP (Packet Data Convergence Protocol, see clause 6.4 of TS 38.300), RLC (Radio Link Control, see clause 6.3 of TS 38.300) and MAC (Medium Access Control, see clause 6.2 of TS 38.300) sublayers, which are terminated in the gNB on the network side. Additionally, a new Access Stratum (AS) sublayer (SDAP, Service Data Adaptation Protocol) is introduced above the PDCP (see e.g., clause 6.5 of 3GPP TS 38.300). A control plane protocol stack is also defined for NR (see for instance TS 38.300, section 4.4.2). An overview of the Layer 2 functions is given in clause 6 of TS 38.300. The functions of the PDCP, RLC, and MAC sublayers are listed respectively in clauses 6.4, 6.3, and 6.2 of TS 38.300. The functions of the RRC layer are listed in clause 7 of TS 38.300.

For instance, the Medium Access Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. The physical layer also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. Examples of the physical channel include a Physical Random Access Channel (PRACH), a Physical Uplink Shared Channel (PUSCH), and a Physical Uplink Control Channel (PUCCH) as uplink physical channels, and a Physical Downlink Shared Channel (PDSCH), a Physical Downlink Control Channel (PDCCH), and a Physical Broadcast Channel (PBCH) as downlink physical channels.

Use cases/deployment scenarios for NR could include enhanced mobile broadband (eMBB), ultra-reliable low-latency communications (URLLC), and massive machine type communication (mMTC), which have diverse requirements in terms of data rates, latency, and coverage. For example, eMBB is expected to support peak data rates (20 Gbps for downlink and 10 Gbps for uplink) and user-experienced data rates on the order of three times what is offered by IMT-Advanced. On the other hand, in case of URLLC, the tighter requirements are put on ultra-low latency (0.5 ms for UL and DL each for user plane latency) and high reliability (1-10-5 within 1 ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g., subcarrier spacing, OFDM symbol duration, cyclic prefix (CP) duration, and number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacings of 15 kHz, 30 kHz, and 60 kHz... are being considered at the moment. The symbol duration Tu and the subcarrier spacing $\Delta f$ are directly related through the formula $\Delta f = 1/Tu$. In a similar manner as in LTE systems, the term "resource element" can be used to denote a minimum resource unit being composed of one subcarrier for the length of one OFDM/SC-FDMA symbol.

In the new radio system 5G-NR for each numerology and each carrier, resource grids of subcarriers and OFDM symbols are defined respectively for uplink and downlink. Each element in the resource grids is called a resource element and is identified based on the frequency index in the frequency domain and the symbol position in the time domain (see 3GPP TS 38.211 v15.6.0).

<Functional Split between NG-RAN and 5GC in 5G NR>

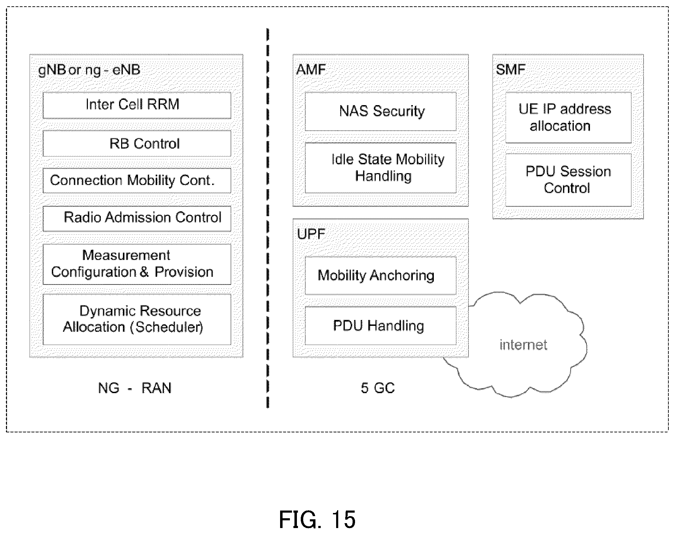

FIG. 15 illustrates the functional split between the NG-RAN and the 5GC. A logical node of the NG-RAN is gNB or ng-eNB. The 5GC includes logical nodes AMF, UPF, and SMF.

For example, gNB and ng-eNB hosts the following main functions:

- Radio Resource Management functions such as Radio Bearer Control, Radio Admission Control, Connection Mobility Control, and dynamic allocation (scheduling) of both uplink and downlink resources to a UE;
- IP header compression, encryption, and integrity protection of data;
- Selection of an AMF during UE attachment in such a case when no routing to an AMF can be determined from the information provided by the UE;
- Routing user plane data towards the UPF;
- Routing control plane information towards the AMF;
- Connection setup and release;
- Scheduling and transmission of paging messages;
- Scheduling and transmission of system broadcast information (originated from the AMF or an operation management maintenance function (OAM: Operation, Admission, Maintenance));
- Measurement and measurement reporting configuration for mobility and scheduling;
- Transport level packet marking in the uplink;
- Session management;
- Support of network slicing;
- QoS flow management and mapping to data radio bearers;
- Support of UEs in the RRC_INACTIVE state;
- Distribution function for NAS messages;
- Radio access network sharing;
- Dual connectivity; and
- Tight interworking between NR and E-UTRA.

The Access and Mobility Management Function (AMF) hosts the following main functions:

- Function of Non-Access Stratum (NAS) signaling termination;
- NAS signaling security;
- Access Stratum (AS) security control;
- Inter-Core Network (CN) node signaling for mobility between 3GPP access networks;

- Idle mode UE reachability (including control and execution of paging retransmission);
- Registration area management;
- Support of intra-system and inter-system mobility;
- Access authentication;
- Access authorization including check of roaming rights;
- Mobility management control (subscription and policies);
- Support of network slicing; and
- Session Management Function (SMF) selection.

In addition, the User Plane Function (UPF) hosts the following main functions:

- Anchor Point for intra-/inter-RAT mobility (when applicable);
- External Protocol Data Unit (PDU) session point for interconnection to a data network;
- Packet routing and forwarding;
- Packet inspection and a user plane part of Policy rule enforcement;
- Traffic usage reporting;
- Uplink classifier to support routing traffic flows to a data network;
- Branching point to support multi-homed PDU session;
- QoS handling for user plane (e.g., packet filtering, gating, UL/DL rate enforcement);
- Uplink traffic verification (SDF to QoS flow mapping); and
- Function of downlink packet buffering and downlink data notification triggering.

Finally, the Session Management Function (SMF) hosts the following main functions:

- Session management;
- UE IP address allocation and management;
- Selection and control of UPF;
- Configuration function for traffic steering at the User Plane Function (UPF) to route traffic to a proper destination;
- Control part of policy enforcement and QoS; and
- Downlink data notification.

<RRC Connection Setup and Reconfiguration Procedure>

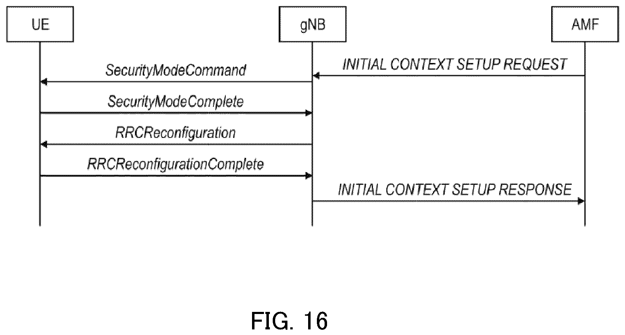

FIG. 16 illustrates some interactions between a UE, gNB, and AMF (a 5GC Entity) performed in the context of a transition of the UE from RRC_IDLE to RRC_CONNECTED for the NAS part (see TS 38 300 v15.6.0).

The RRC is higher layer signaling (protocol) used to configure the UE and gNB. With this transition, the AMF prepares UE context data (which includes, for example, a PDU session context, security key, UE Radio Capability, UE Security Capabilities, and the like) and sends it to the gNB with an INITIAL CONTEXT SETUP REQUEST. Then, the gNB activates the AS security with the UE. This activation is performed by the gNB transmitting to the UE a SecurityMode-Command message and by the UE responding to the gNB with the SecurityModeComplete message. Afterwards, the gNB performs the reconfiguration to setup the Signaling Radio Bearer 2 (SRB2) and Data Radio Bearer(s) (DRB(s)) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not set up. Finally, the gNB indicates the AMF that the setup procedure is completed with INITIAL

CONTEXT SETUP RESPONSE.

Thus, the present disclosure provides a 5th Generation Core (5GC) entity (e.g., AMF, SMF, or the like) including control circuitry, which, in operation, establishes a Next Generation (NG) connection with a gNodeB, and a transmitter, which in operation, transmits an initial context setup message to the gNodeB via the NG connection such that a signaling radio bearer between the gNodeB and a User Equipment (UE) is set up. Specifically, the gNodeB transmits Radio Resource Control (RRC) signaling including a resource allocation configuration Information Element (IE) to the UE via the signaling radio bearer. Then, the UE performs an uplink transmission or a downlink reception based on the resource allocation configuration.

<Usage Scenarios of IMT for 2020 and beyond>

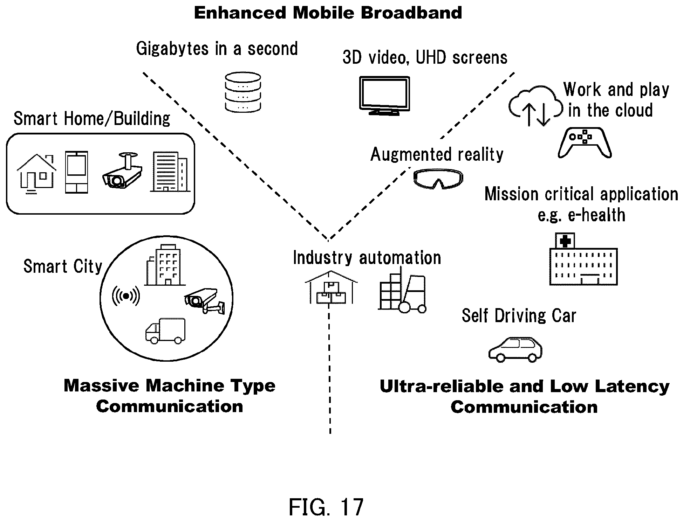

FIG. 17 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications (mMTC). FIG. 17 illustrates some examples of envisioned usage scenarios for IMT for 2020 and beyond (see e.g., ITU-R M.2083 FIG. 2).

The URLLC use case has stringent requirements for capabilities such as throughput, latency and availability. The URLLC use case has been envisioned as one of the enablers for future vertical applications such as wireless control of industrial manufacturing or production processes, remote medical surgery, distribution automation in a smart grid, transportation safety. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a block error rate (BLER) of 1E-5 for a packet size of 32 bytes with a user plane latency of 1 ms.

From the physical layer perspective, reliability can be improved in a number of possible ways. The current scope for improving the reliability involves defining separate CQI tables for URLLC, more compact DCI formats, repetition of PDCCH, or the like. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency/higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, for example, for URLLC and mMTC, is high reliability or ultra-reliability. Several mechanisms can improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability improvement in general, regardless of particular communication scenarios.

For NR URLLC, further use cases with tighter requirements have been envisioned such as factory automation, transport industry and electrical power distribution. The tighter requirements are higher reliability (up to 10-6 level), higher availability, packet sizes of up to 256 bytes, time synchronization up to the extent of a few μs (where the value can be one or a few μs depending on frequency range and short latency on the order of 0.5 to 1 ms (in particular a target user plane latency of 0.5 ms), depending on the use cases).

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements are possible. The term "mini-slot" refers to a Transmission Time Interval (TTI) including a smaller number of symbols than a slot (a slot comprising fourteen symbols).

<QoS Control>

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU sessions. For each UE, the NG-RAN establishes at least one Data Radio Bearer (DRB) together with the PDU session, e.g., as illustrated above with reference to FIG. 16. Further, additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

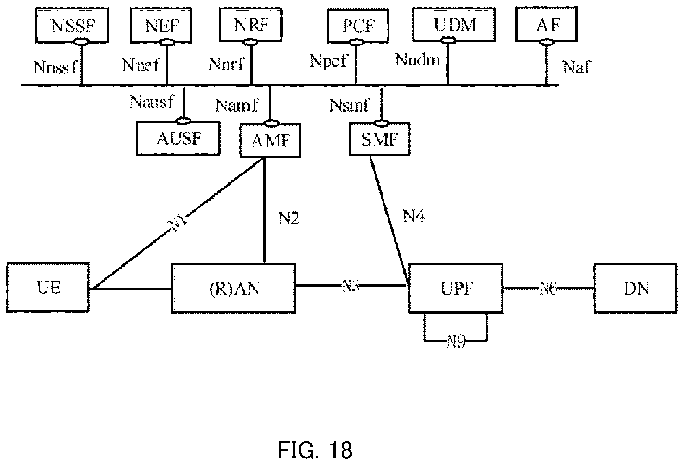

FIG. 18 illustrates a 5G NR non-roaming reference architecture (see TS 23.501 v16.1.0, section 4.23). An Application Function (AF) (e.g., an external application server hosting 5G services, exemplarily described in FIG. 17) interacts with the 3GPP Core Network in order to provide services, for example to support application influencing on traffic routing, accessing Network Exposure Function (NEF) or interacting with the policy framework for policy control (e.g., QoS control) (see Policy Control Function, PCF). Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

FIG. 18 illustrates further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN, e.g., operator services, Internet access, or third party services). All of or a part of the core network functions and the application services may be deployed and running on cloud computing environments.

In the present disclosure, thus, an application server (e.g., AF of the 5G architecture), is provided that includes: a transmitter, which in operation, transmits a request containing a QoS requirement for at least one of URLLC, eMMB and mMTC services to at least one of functions (such as NEF, AMF, SMF, PCF, and UPF) of the 5GC to establish a PDU session including a radio bearer between a gNodeB and a UE in accordance with the QoS requirement; and control circuitry, which, in operation, performs the services using the established PDU session.

In the description of the present disclosure, the term ending with a suffix, such as "-er" "-or" or "-ar" may be interchangeably replaced with another term, such as "circuit (circuitry)," "device," "unit," or "module."

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smartphone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an exemplary embodiment of the present disclosure includes: control circuitry, which, in operation, determines first information on surplus power for a first transmission configuration configured for the terminal and second information on surplus power for a second transmission configuration not configured for the terminal; and transmission circuitry, which, in operation, transmits the first information and the second information.

**In** the exemplary embodiment of the present disclosure, the second information includes information on maximum transmission power of the second transmission configuration.

**In** the exemplary embodiment of the present disclosure, the second transmission configuration includes a configuration of a transmission waveform.

**In** the exemplary embodiment of the present disclosure, the second transmission configuration includes at least one configuration of a modulation scheme, a number of allocation resource blocks, and/or an allocation resource block position.

**In** the exemplary embodiment of the present disclosure, the transmission circuitry, in a case where dynamic switching of a transmission waveform in an uplink is enabled, transmits the first information by using a first Medium Access Control-Control Element

(MAC CE) and transmits the second information by using a second MAC CE having a same configuration as the first MAC CE.

In the exemplary embodiment of the present disclosure, the transmission circuitry, in a case where dynamic switching of a transmission waveform in an uplink is enabled, transmits the second information by using a second Medium Access Control-Control Element (MAC CE) in which a field of n bytes (n is a positive integer) is added to a first MAC CE for transmitting the first information.

In the exemplary embodiment of the present disclosure, the transmission circuitry, in a case where dynamic switching of a transmission waveform in an uplink is enabled, transmits the second information by using a part of a field of a Medium Access Control-Control Element (MAC CE) for transmitting the first information.

In the exemplary embodiment of the present disclosure, the transmission circuitry transmits the second information by using uplink control information (UCI) multiplexed with an uplink shared channel or the UCI on an uplink control channel.

In the exemplary embodiment of the present disclosure, a condition for triggering feedback of the second information is identical to a condition for triggering feedback of the first information.

In the exemplary embodiment of the present disclosure, a condition for triggering feedback of the second information is different from a condition for triggering feedback of the first information.

In the exemplary embodiment of the present disclosure, the condition is at least one of a condition based on a timer related to a period for feeding back the second information, a condition based on a path loss of the second transmission configuration, and/or a condition based on a difference between surplus transmission power of the first transmission configuration and surplus transmission power of the second transmission configuration.

In the exemplary embodiment of the present disclosure, whether to feed back the second information is indicated to the terminal by downlink control information.

A base station according to an exemplary embodiment of the present disclosure includes: control circuitry, which, in operation, determines information on reception of first information on surplus power for a first transmission configuration configured for a terminal and second information on surplus power for a second transmission configuration not configured for the terminal; and reception circuitry, which, in operation, receives the first information and the second information based on the information on the reception.

In a communication method according to an exemplary embodiment of the present disclosure, a terminal determines first information on surplus power for a first transmission configuration configured for the terminal and second information on surplus power for a second transmission configuration not configured for the terminal, and transmits the first information and the second information.

In a communication method according to an exemplary embodiment of the present disclosure, a base station determines information on reception of first information on surplus power for a first transmission configuration configured for a terminal and second information on surplus power for a second transmission configuration not configured for the terminal, and receives the first information and the second information based on the information on the reception.

The disclosure of Japanese Patent Application No. 2022-180343, filed on November 10, 2022, including the specification, drawings and abstract, is incorporated herein by reference in its entirety.

Industrial Applicability

An exemplary embodiment of the present disclosure is useful for radio communication systems.

Reference Signs List

100 Base station
101, 205 Controller
102 Higher-layer control signal generator
103 Downlink control information generator
104, 206 Encoder
105, 207 Modulator
106, 208 Signal assigner
107, 209 Transmitter
108, 201 Receiver
109, 202 Extractor
110, 203 Demodulator
111, 204 Decoder
200 Terminal

**Claims**

1. A terminal, comprising:

   control circuitry, which, in operation, determines first information on surplus power for a first transmission configuration configured for the terminal and second information on surplus power for a second transmission configuration not configured for the terminal; and
   transmission circuitry, which, in operation, transmits the first information and the second information.

2. The terminal according to claim 1, wherein
   the second information includes information on maximum transmission power of the second transmission configuration.

3. The terminal according to claim 1, wherein
   the second transmission configuration includes a configuration of a transmission waveform.

4. The terminal according to claim 3, wherein
   the second transmission configuration includes at least one configuration of a modulation scheme, a number of allocation resource blocks, and/or an allocation resource block position.

5. The terminal according to claim 1, wherein
   the transmission circuitry, in a case where dynamic switching of a transmission waveform in an uplink is enabled, transmits the first information by using a first Medium Access Control-Control Element (MAC CE) and transmits the second information by using a second MAC CE having a same configuration as the first MAC CE.

6. The terminal according to claim 1, wherein
   the transmission circuitry, in a case where dynamic switching of a transmission waveform in an uplink is enabled, transmits the second information by using a second Medium Access Control-Control Element (MAC CE) in which a field of n bytes (n is a positive integer) is added to a first MAC CE for transmitting the first information.

7. The terminal according to claim 1, wherein
   the transmission circuitry, in a case where dynamic switching of a transmission waveform in an uplink is enabled, transmits the second information by using a part of a field of a Medium Access Control-Control Element (MAC CE) for transmitting the first information.

8. The terminal according to claim 1, wherein
   the transmission circuitry transmits the second information by using uplink control information (UCI) multiplexed with an uplink shared channel or the UCI on an uplink control channel.

9. The terminal according to claim 1, wherein
a condition for triggering feedback of the second information is identical to a condition for triggering feedback of the first information.

10. The terminal according to claim 1, wherein
a condition for triggering feedback of the second information is different from a condition for triggering feedback of the first information.

11. The terminal according to claim 10, wherein
the condition is at least one of a condition based on a timer related to a period for feeding back the second information, a condition based on a path loss of the second transmission configuration, and/or a condition based on a difference between surplus transmission power of the first transmission configuration and surplus transmission power of the second transmission configuration.

12. The terminal according to claim 1, wherein
whether to feed back the second information is indicated to the terminal by downlink control information.

13. A base station, comprising:

control circuitry, which, in operation, determines information on reception of first information on surplus power for a first transmission configuration configured for a terminal and second information on surplus power for a second transmission configuration not configured for the terminal; and
reception circuitry, which, in operation, receives the first information and the second information based on the information on the reception.

14. A communication method, comprising:

determining, by a terminal, first information on surplus power for a first transmission configuration configured for the terminal and second information on surplus power for a second transmission configuration not configured for the terminal; and
transmitting, by the terminal, the first information and the second information.

15. A communication method, comprising:

determining, by a base station, information on reception of first information on surplus power for a first transmission configuration configured for a terminal and second information on surplus power for a second transmission configuration not configured for the terminal; and
receiving, by the base station, the first information and the second information based on the information on the reception.

| P | R | PH |
|---|---|---|
| MPE or R | | $P_{CMAX,f,c}$ |

FIG. 1

| PH | Power Headroom Level |
|---|---|
| 0 | POWER_HEADROOM_0 |
| 1 | POWER_HEADROOM_1 |
| 2 | POWER_HEADROOM_2 |
| 3 | POWER_HEADROOM_3 |
| ... | ... |
| 60 | POWER_HEADROOM_60 |
| 61 | POWER_HEADROOM_61 |
| 62 | POWER_HEADROOM_62 |
| 63 | POWER_HEADROOM_63 |

FIG. 2

| Reported value | Measured quantity value (dB) |
|---|---|
| POWER_HEADROOM_0 | PH < −32 |
| POWER_HEADROOM_1 | −32 <= PH < −31 |
| POWER_HEADROOM_2 | −31 <= PH < −30 |
| POWER_HEADROOM_3 | −30 <= PH < −29 |
| ... | ... |
| POWER_HEADROOM_53 | 20 <= PH < 21 |
| POWER_HEADROOM_54 | 21 <= PH < 22 |
| POWER_HEADROOM_55 | 22 <= PH < 24 |
| POWER_HEADROOM_56 | 24 <= PH < 26 |
| POWER_HEADROOM_57 | 26 <= PH < 28 |
| POWER_HEADROOM_58 | 28 <= PH < 30 |
| POWER_HEADROOM_59 | 30 <= PH < 32 |
| POWER_HEADROOM_60 | 32 <= PH < 34 |
| POWER_HEADROOM_61 | 34 <= PH < 36 |
| POWER_HEADROOM_62 | 36 <= PH < 38 |
| POWER_HEADROOM_63 | PH >= 38 |

FIG. 3

EP 4 618 639 A1

| $P_{CMAX,f,c}$ | Nominal UE transmit power level |
|:---:|:---:|
| 0 | PCMAX_C_00 |
| 1 | PCMAX_C_01 |
| 2 | PCMAX_C_02 |
| ... | ... |
| 61 | PCMAX_C_61 |
| 62 | PCMAX_C_62 |
| 63 | PCMAX_C_63 |

FIG. 4

| Reported value | Measured quantity value | Unit |
|---|---|---|
| PCMAX_C_00 | $P_{CMAX,f,c} < -29$ | dBm |
| PCMAX_C_01 | $-29 <= P_{CMAX,f,c} < -28$ | dBm |
| PCMAX_C_02 | $-28 <= P_{CMAX,f,c} < -27$ | dBm |
| ... | ... | ... |
| PCMAX_C_61 | $31 <= P_{CMAX,f,c} < 32$ | dBm |
| PCMAX_C_62 | $32 <= P_{CMAX,f,c} < 33$ | dBm |
| PCMAX_C_63 | $33 <= P_{CMAX,f,c}$ | dBm |

FIG. 5

100

| CONTROLLER | → | RECEIVER |

FIG. 6

200

| CONTROLLER | → | TRANSMITTER |

FIG. 7

FIG. 8

FIG. 9

| Current transmission setting | | Reference transmission setting 1 | Reference transmission setting 2 |
|---|---|---|---|
| DFT-s-OFDM | Pi/2-BPSK | DFT-s-OFDM, QPSK | CP-OFDM, QPSK |
| | QPSK | DFT-s-OFDM, pi/2-BPSK | CP-OFDM, QPSK |
| | 16QAM | DFT-s-OFDM,QPSK | CP-OFDM, 16QAM |
| | 64QAM | DFT-s-OFDM,16QAM | CP-OFDM, 64QAM |
| | 256QAM | DFT-s-OFDM, 64QAM | CP-OFDM, 256QAM |
| CP-OFDM | QPSK | DFT-s-OFDM, QPSK | CP-OFDM, 16QAM |
| | 16QAM | DFT-s-OFDM, 16QAM | CP-OFDM, 64QAM |
| | 64QAM | DFT-s-OFDM,64QAM | CP-OFDM, 256QAM |
| | 256QAM | DFT-s-OFDM, 256QAM | – |

FIG. 10

FIG. 11

EP 4 618 639 A1

EP 4 618 639 A1

<u>100</u>

FIG. 12

FIG. 13

EP 4 618 639 A1

FIG. 14

| gNB or ng - eNB | AMF | SMF |
|---|---|---|
| Inter Cell RRM | NAS Security | UE IP address allocation |
| RB Control | Idle State Mobility Handling | PDU Session Control |
| Connection Mobility Cont. | | |
| Radio Admission Control | UPF | |
| Measurement Configuration & Provision | Mobility Anchoring | |
| Dynamic Resource Allocation (Scheduler) | PDU Handling | internet |
| NG - RAN | 5 GC | |

FIG. 15

FIG. 16

FIG. 17

FIG. 18

## INTERNATIONAL SEARCH REPORT

| International application No. |
| --- |
| **PCT/JP2023/021250** |

**A. CLASSIFICATION OF SUBJECT MATTER**

*H04W 52/30*(2009.01)i; *H04W 28/06*(2009.01)i; *H04W 28/18*(2009.01)i; *H04W 72/1268*(2023.01)i; *H04W 72/21*(2023.01)i
FI:  H04W52/30; H04W28/06 110; H04W72/21; H04W72/1268; H04W28/18

According to International Patent Classification (IPC) or to both national classification and IPC

**B. FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | NOKIA, NOKIA SHANGHAI BELL. Dynamic switching between DFT-s-OFDM and CP-OFDM [online]. 3GPP TSG RAN WG1 #111 R1-2211597. 07 November 2022 [retrieved on 10 August 2023] particularly, section 2.3 | 1, 3, 9-15 |
| Y | | 2, 4-8 |
| X | INTERDIGITAL, INC. Dynamic switching between DFT-S-OFDM and CP-OFDM [online]. 3GPP TSG RAN WG1 #110b-e R1-2209205. 19 October 2022 [retrieved on 10 August 2023] particularly, section 5 | 1, 3, 13-15 |
| Y | | 2, 4-8 |
| Y | ERICSSON. Discussion on Dynamic UL Waveform Switching [online]. 3GPP TSG RAN WG1 #110b-e R1-2209674. 19 October 2022 [retrieved on 10 August 2023] particularly, section 2.3 | 2, 4 |
| Y | WO 2019/035213 A1 (NTT DOCOMO, INC.) 21 February 2019 (2019-02-21) paragraphs [0071], [0072], [0075] | 5-8 |

✓ Further documents are listed in the continuation of Box C. ✓ See patent family annex.

```
*    Special categories of cited documents:
"A"  document defining the general state of the art which is not considered
     to be of particular relevance
"E"  earlier application or patent but published on or after the international
     filing date
"L"  document which may throw doubts on priority claim(s) or which is
     cited to establish the publication date of another citation or other
     special reason (as specified)
"O"  document referring to an oral disclosure, use, exhibition or other
     means
"P"  document published prior to the international filing date but later than
     the priority date claimed
```

```
"T"  later document published after the international filing date or priority
     date and not in conflict with the application but cited to understand the
     principle or theory underlying the invention
"X"  document of particular relevance; the claimed invention cannot be
     considered novel or cannot be considered to involve an inventive step
     when the document is taken alone
"Y"  document of particular relevance; the claimed invention cannot be
     considered to involve an inventive step when the document is
     combined with one or more other such documents, such combination
     being obvious to a person skilled in the art
"&"  document member of the same patent family
```

| Date of the actual completion of the international search | Date of mailing of the international search report |
| --- | --- |
| **10 August 2023** | **22 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2023/021250** |

**C.    DOCUMENTS CONSIDERED TO BE RELEVANT**

| Category* | Citation of document, with indication, where appropriate, of the relevant passages | Relevant to claim No. |
|---|---|---|
| Y | WO 2018/207374 A1 (NTT DOCOMO, INC.) 15 November 2018 (2018-11-15) paragraph [0043] | 5-8 |

Form PCT/ISA/210 (second sheet) (January 2015)

**EP 4 618 639 A1**

INTERNATIONAL SEARCH REPORT
Information on patent family members

International application No.

**PCT/JP2023/021250**

| Patent document cited in search report | | | Publication date (day/month/year) | Patent family member(s) | | | Publication date (day/month/year) |
|---|---|---|---|---|---|---|---|
| WO | 2019/035213 | A1 | 21 February 2019 | US | 2020/0221422 | A1 | |
| | | | | paragraphs [0078], [0079], [0082] | | | |
| | | | | CN | 111226484 | A | |
| WO | 2018/207374 | A1 | 15 November 2018 | US | 2020/0169903 | A1 | |
| | | | | paragraph [0054] | | | |

Form PCT/ISA/210 (patent family annex) (January 2015)

## REFERENCES CITED IN THE DESCRIPTION

**Patent documents cited in the description**

- JP 2022180343 A

**Non-patent literature cited in the description**

- NR Base Station (BS) radio transmission and reception (Release 15). *3GPP TS38.104 V15.18.0*, September 2022
- **CHINA TELECOM**. New WID on NR coverage enhancements. *RP-202928*, December 2020
- **CHINA TELECOM**. Revised WID on Further NR coverage enhancements. *RP-220937*, March 2022
- NR Physical channels and modulation (Release 17). *3GPP TS38.211 V17.3.0*, September 2022
- NR Multiplexing and channel coding (Release 17). *3GPP TS38.212 V17.3.0*, September 2022
- NR Physical layer procedures for control (Release 17). *3GPP TS38.213 V17.3.0*, September 2022
- NR Physical layer procedures for data (Release 17). *3GPP TS38.214 V17.3.0*, September 2022
- NR; Medium Access Control (MAC) protocol specification (Release 17). *3GPP TS38.321 V17.2.0*, September 2022
- NR; Requirements for support of radio resource management (Release 17). *3GPP TS38.133 V17.7.0*, September 2022
- NR; User Equipment (UE) radio transmission and reception; Part 1: Range 1 Standalone (Release 17). *3GPPP TS38.101-1 V17.7.0*, September 2022